# FASCICULE DE BREVET EUROPEEN

(11) **EP 0 837 261 B1**
(45) Date de publication et mention de la délivrance du brevet: **01.03.2000**
(21) Numéro de dépôt: 97402341.8
(22) Date de dépôt: 06.10.1997
(51) Int. Cl.: F16F 13/08

(54) **Amortisseur de vibrations, notamment pour rotor d'hélicoptère**
Schwingungsdämpfer, insbesondere für Hubschrauberrotor
Vibration damper, in particular for helicopter rotor

(30) Priorité: 15.10.1996 FR 9612547
(43) Date de publication de la demande: 22.04.1998
(73) Titulaire: HUTCHINSON, 75008 Paris (FR)
(72) Inventeur: Sieg, Thierry, 60500 Vineuil Saint-Firmin (FR); Levallard, Patrice, 94360 Bry-sur-Marne (FR)
(74) Mandataire: Jacquard, Philippe Jean-Luc

(56) Documents cités:
- EP-A- 0 486 227
- EP-A- 0 557 947
- DE-A- 3 738 716
- DE-A- 3 913 819
- DE-A- 4 034 573
- FR-A- 2 255 508
- US-A- 2 502 322
- US-A- 2 555 347
- US-A- 4 957 279
- US-A- 5 366 193
- PATENT ABSTRACTS OF JAPAN vol. 17, no. 447 (M-1464), 17 août 1993 & JP 05 099267 A (KURASHIKI KAKO), 20 avril 1993,
- PATENT ABSTRACTS OF JAPAN vol. 011, no. 360 (M-645), 25 novembre 1987 & JP 62 137442 A (NISSAN MOTOR CO LTD;OTHERS: 01), 20 juin 1987,

## Description

La présente invention a pour objet un amortisseur de vibrations notamment pour rotor d'hélicoptère, et plus particulièrement un rotor semi-rigide dont les pales ne présentent pas d'articulation.

Le Brevet des Etats-Unis US-5 540 549 concerne un dispositif d'amortissement fluidique comprenant un élément menant qui est constitué par un organe interne 22 présentant une direction axiale et qui est entraîné par un élément d'entraînement qui comporte un élément mobile 23 et une rotule 65 destinée à compenser notamment les mouvements de torsion de la pale qui sont dus à la commande de pas de la pale, ainsi que les mouvements de battement.

L'amortissement est réalisé d'une part par une structure lamifiée 28 qui présente une alternance de couches rigides 28 et de couches d'élastomère 32, et d'autre part par un piston 38 qui se déplace dans une chambre fluidique. La structure lamifiée présente une rigidité élevée parallèlement à la direction axiale précitée, et une rigidité faible dans une direction perpendiculaire à la direction axiale.

Le piston 38 permet d'obtenir un amortissement des vibrations dans toute la plage de leurs amplitudes en mettant en oeuvre simultanément deux phénomènes liés, à savoir d'une part un phénomène dit de perte de charge par restriction (« throttling component ») et un phénomène de freinage visqueux, c'est-à-dire un amortissement par cisaillement d'huile visqueuse, l'huile utilisée étant une huile silicone ayant une viscosité comprise entre 10.000 et 100 000 centistokes (1 stoke = 10⁻⁴ m²/s).

Ce dispositif présente les inconvénients suivants :
- premièrement, le phénomène de perte de charge par restriction est prépondérant dans le cas où des forces d'amortissement d'amplitude élevées sont nécessaires, ce qui est le cas dans l'application envisagée aux rotors d'hélicoptère ;
- deuxièmement, il ne permet pas de s'affranchir de l'incidence sur le dispositif des vibrations de compression qui se produisent dans le cas des rotors d'hélicoptère. Ces vibrations de compression affectent les caractéristiques de fatigue du système. On notera que la rotule 65 ne permet d'agir que sur les mouvements de torsion et de battement (« cocking »), mais elle ne permet pas de s'affranchir du phénomène de compression.

Le premier inconvénient précité entraîne une mauvaise linéarité du dispositif d'amortissement, qui est due au fait que l'amortissement par phénomène de perte de charge est par nature non linéaire puisqu'il évolue en fonction du carré de la vitesse de déplacement.

Le deuxième inconvénient identifié par la Demanderesse, s'accompagne dans le cas du Brevet US-5 540 549 précité d'un phénomène parasite qui induit une modulation de l'amortissement par freinage visqueux. En effet, cet amortissement dépend en grande partie du jeu qui existe entre le piston 38 et les parois de la chambre ainsi que de la direction axiale précise du piston. L'action du phénomène de compression tendant à décentrer et/ou à modifier la direction de l'axe du piston, il en résulte un phénomène de modulation de l'amortissement qui s'ajoute à la non-linéarité dudit amortissement par perte de charge.

L'invention a pour objet un amortisseur de vibrations qui ne présente pas les inconvénients précités.

L'idée de base de l'invention est de mettre en oeuvre un amortissement ne mettant pas en oeuvre ledit phénomène de perte de charge, mais un amortissement par freinage visqueux mettant en oeuvre le cisaillement et de conférer au dispositif un découplage efficace entre les mouvements de cisaillement et les excitations de compression.

Selon un premier mode de réalisation, l'invention concerne un amortisseur de vibrations, notamment pour rotor d'hélicoptère, comprenant un élément menant ayant un axe dit axe principal et destiné à être entraîné par un élément d'entraînement qui, dans le cas d'un rotor d'hélicoptère est lié à une pale d'hélicoptère, ainsi qu'un élément rigide destiné à être monté sur une structure qui peut être par exemple un manchon qui pilote la rotation de la pale, et comportant un ensemble d'amortissement reliant fonctionnellement l'élément menant et l'élément rigide pour amortir les vibrations dans au moins une direction perpendiculaire audit axe principal, l'ensemble d'amortissement comportant d'une part un dispositif d'hydraulique d'amortissement disposé dans une cavité de fluide et d'autre part un dispositif flexible présentant une raideur élevée dans une direction parallèle audit axe principal et une faible raideur dans ladite direction perpendiculaire à l'axe principal, caractérisé en ce que le dispositif hydraulique d'amortissement présente un premier et un deuxième ensembles de lames planes dont chacune a son plan perpendiculaire à l'axe principal, le premier ensemble étant monté sur l'élément menant par l'intermédiaire d'une première liaison mécanique et le deuxième ensemble étant monté sur l'élément rigide par l'intermédiaire d'une deuxième liaison mécanique, les lames du premier et du deuxième ensembles étant disposées de manière imbriquée et étant étroitement espacées de manière à présenter des zones d'amortissement visqueux situées chacune entre une lame du premier ensemble et une lame du deuxième ensemble et en ce qu'au moins une des première et deuxième liaisons mécaniques comporte au moins un élément élastique qui présente une faible raideur parallèlement à l'axe principal de manière à assurer un découplage des excitations de compression entre l'élément menant et l'élément rigide.

Selon un deuxième mode de réalisation, l'invention concerne un amortisseur de vibrations, notamment pour rotor d'hélicoptère, comprenant un élément menant ayant un axe dit axe principal et destiné à être entraîné par un élément d'entraînement ainsi qu'un élément rigide destiné à être monté sur une structure, et comportant un ensemble d'amortissement reliant fonctionnellement l'élément menant et l'élément rigide pour amortir les vibrations dans au moins une direction perpendiculaire audit axe principal, l'ensemble d'amortissement comportant d'une part un dispositif hydraulique d'amortissement disposé dans une cavité de fluide et d'autre part un dispositif flexible présentant une raideur élevée dans une direction parallèle audit axe principal et une faible raideur dans ladite direction perpendiculaire à l'axe principal, caractérisé en ce que le dispositif hydraulique d'amortissement présente un premier et un deuxième ensembles de lames planes dont chacune a son plan perpendiculaire à l'axe principal, le premier ensemble étant monté sur l'élément menant par l'intermédiaire d'une première liaison mécanique et le deuxième ensemble étant monté sur l'élément rigide par l'intermédiaire d'une deuxième liaison mécanique, les lames du premier et du deuxième ensembles étant disposées de manière imbriquée et étant étroitement espacées de manière à présenter des zones d'amortissement visqueux situées chacune entre une lame du premier ensemble et une lame du deuxième ensemble et en ce que chaque lame d'au moins un des premier et deuxième ensembles présente une région dans laquelle elle n'est pas imbriquée avec les lames de l'autre ensemble, les régions desdites lames étant dimensionnées de manière à conférer au dispositif hydraulique d'amortissement une faible raideur dans une direction parallèle audit axe principal de manière à assurer un découplage des excitations de compression entre l'élément menant et l'élément rigide.

L'amortisseur de vibration peut mettre en oeuvre un ou plusieurs des modes de réalisation précités, c'est-à-dire le premier et/ou le deuxième mode de réalisation précités.

Au moins undit élément élastique peut être en élastomère ou bien il peut être une rondelle élastique profilée. Le dispositif flexible est de préférence une structure lamifiée présentant un empilement de lames planes et de plaques élastomères.

Selon un mode de réalisation préféré, le dispositif est caractérisé en ce que l'élément menant est un cylindre aux extrémités duquel sont montés respectivement un fond et un couvercle, en ce que le dispositif flexible est cylindrique et présente un axe qui est l'axe principal et est monté entre deux faces internes respectivement du couvercle et du fond de manière à entourer ledit dispositif hydraulique d'amortissement, la cavité de fluide étant délimitée par l'élément menant, le fond, le couvercle et le dispositif flexible, et en ce que ledit élément rigide est disposé dans une région médiane du dispositif flexible.

L'invention sera mieux comprise à la lecture de la description qui va suivre, donnée à titre d'exemple non limitatif, en liaison avec les dessins dans lesquels:
- la Fig. 1 représente en perspective un dispositif amortisseur de vibrations, selon un mode de réalisation préféré de l'invention et qui est destiné à un rotor d'hélicoptère semi-rigide dont les pales ne présentent pas d'articulation (« bearingless ») ;
- la Fig. 2 représente une coupe longitudinale du dispositif selon la Fig. 1 ;
- les Figs. 3, 4, 6, 7a, 7b et 8 représentent des variantes du dispositif de la Fig. 2 ;
- et les Figs. 5 et 9 représentent en vue de dessus deux modes de réalisation des lames.

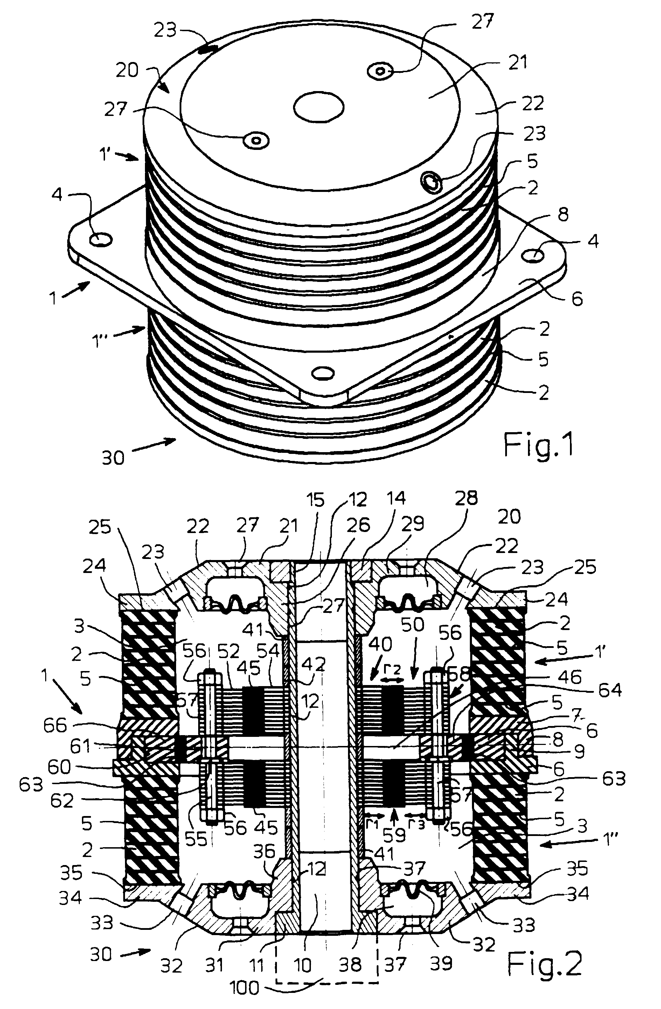

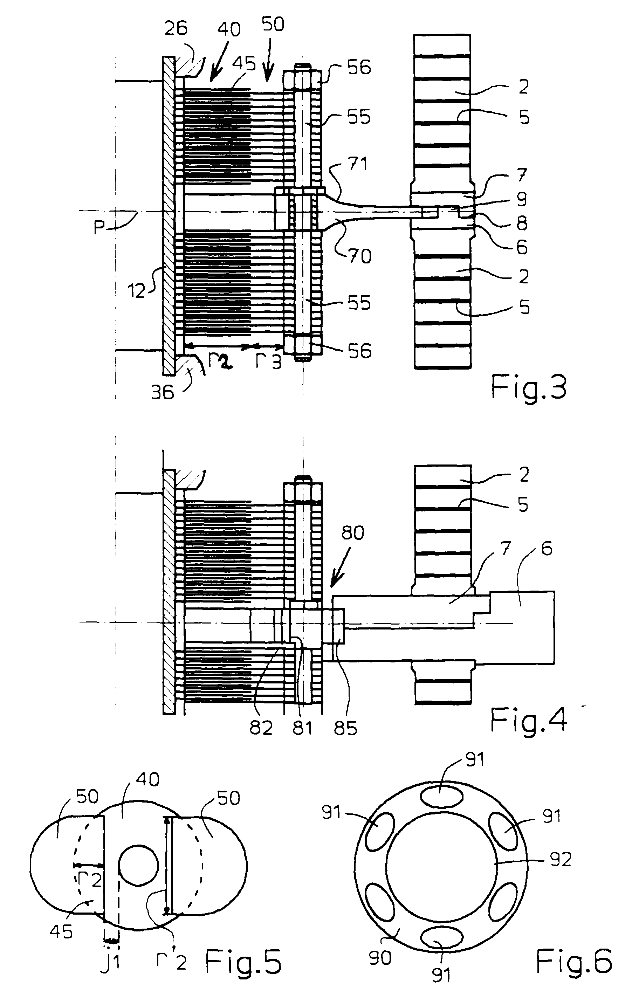

L'amortisseur représenté aux Figs. 1 et 2 présente un cylindre creux 10 en matériau rigide dont l'axe constitue l'axe principal de l'amortisseur et qui, du fait qu'il est destiné à être couplé à une pale d'hélicoptère, par l'intermédiaire d'un élément d'entraînement 100, constitue l'élément menant de l'amortisseur.

A chaque pale correspondent deux amortisseurs, l'un monté au-dessus de la pale et l'autre en-dessous de celle-ci, l'axe du cylindre 10 ayant une position nominale verticale.

L'élément rigide (ou « élément mené ») est une collerette 6 qui est destinée à être montée par ses trous 4, sur un manchon qui pilote la rotation de la pale.

A chacune des extrémités 11 et 15, sont montés respectivement un couvercle 20 et un fond 30, ce montage s'effectuant de manière étanche grâce à des joints 12 logés dans le contour extérieur du cylindre 10.

Le couvercle 20 présente une région centrale 21 en forme de disque, entourée par une région tronconique 22 qui se prolonge vers l'extérieur par une collerette 24. Il présente également une région cylindrique 26 dont la face interne 27 est montée sur le contour externe du cylindre 10. Le couvercle 20 présente également une chambre de compensation de dilatation 28 délimitée par une membrane annulaire ondulée 29. Une face annulaire 25 du couvercle 20 est en appui sur une face supérieure d'un dispositif flexible 1 de forme cylindrique et qui comporte une structure lamifiée constituée d'un empilement de rondelles métalliques 5, et de rondelles en élastomère 2, dont l'axe est l'axe du cylindre 10.

Le fond 30 présente une région centrale 31 en forme de disque, entourée par une région tronconique 32 qui se prolonge vers l'extérieur par une collerette 34. Il présente également une région cylindrique 37 dont la face interne est montée sur le contour externe du cylindre 10.

Le fond 30 présente également une chambre de dilatation 38 délimitée par une membrane annulaire ondulée 39. Une face annulaire 35 du fond 30 est en appui sur une face inférieure du dispositif flexible 1.

Le dispositif flexible 1 présente une raideur élevée dans une direction parallèle à l'axe principal et notamment vis-à-vis des mouvements de compression. Il présente par contre une faible raideur perpendiculairement à l'axe principal.

Il est en général réalisé en caoutchouc à faible amortissement et donc à faible dissipation énergétique, par exemple en un élastomère ayant une valeur de tgδ<0,3. Dans l'exemple représenté, le dispositif flexible 1 est lamifié et présente un empilement de lames métalliques annulaires 5 et de rondelles en élastomère 2 dont l'axe est l'axe principal de l'amortisseur.

La collerette 6 est montée dans une région médiane du dispositif flexible 1 et, dans l'exemple représenté, elle sépare celui-ci en deux régions cylindriques supérieures 1' et inférieure 1'' symétriques par rapport au plan de symétrie P. Au-dessus de la collerette 6 est montée une pièce annulaire 7 présentant une région cylindrique 8 venant se centrer sur une région cylindrique complémentaire 9 de la collerette 6.

Dans l'espace compris entre les pièces 6 et 7 vient se loger une région annulaire externe 62 d'une bague de liaison annulaire 60 qui, dans l'exemple représenté à la Fig. 1 présente une région annulaire interne rigide 64, une région annulaire centrale en élastomère 63 et la région annulaire externe 62.

Le dispositif hydraulique d'amortissement comporte deux ensembles de lames ou feuilles, respectivement 40 qui sont solidaires d'un manchon 42 entourant le cylindre 10, et 50 qui sont assemblés entre elles par des tirants 55 et des écrous 56, avec interposition d'entretoises 57 permettant de leur conférer le même espacement que celui des lames 50. Entre le manchon 42 et les régions cylindriques 26 et 36 sont disposées des entretoises 41.

Dans une région cylindrique 45 d'épaisseur radiale r₂, les lames 40 et 50 forment une structure imbriquée où elles sont étroitement espacées.

Les lames 40 et 50 sont en général des lames ou feuilles métalliques flexibles, les lames 40 ont par exemple une forme de disque et leur axe est ledit axe principal, et les lames 50 peuvent être en forme de demi-lune (voir Fig. 5). L'épaisseur des lames 40 et 50 est en général de quelques dixièmes de millimètres. Dans la région 45, l'espacement entre les lames 40 et 50 peut être également de l'ordre de quelques dixièmes de millimètres. A titre de variante, les lames 40 et 50 peuvent également être en forme de disque.

L'élément de liaison 60 est percé de trous 61 permettant le passage des tirants 55 et l'élément de liaison 60 est serré entre deux empilements supérieur 58 et inférieur 59 de lames 40 et 50 symétriques par rapport au plan P perpendiculaire à l'axe 10.

Le couvercle 20, le fond 30, le dispositif flexible lamifié 1 et le cylindre 10 délimitent une chambre 3 qui est remplie, par les orifices 23 et 33, d'un fluide visqueux tel qu'une huile de viscosité supérieure à 100 000 centistokes à température ambiante.

On préférera une huile ayant une viscosité comprise à température ambiante entre 300 000 centistokes et 5 millions de centistokes. Les chambres 28 et 38 auxquelles il est possible d'accéder par les orifices 27 et 37, forment de manière classique des chambres de compensation de dilatation pour la cavité 3 remplie d'huile.

Le dispositif hydraulique d'amortissement à lames 40 et 50 disposé dans la cavité 3 présente dans la région 45 une raideur très élevée parallèlement à l'axe principal, mais par contre, il présente, perpendiculairement à cet axe une faible raideur qui dépend de la viscosité de l'huile et de l'espacement des lames, ainsi qu'un excellent coefficient d'amortissement avec une valeur de tg δ qui peut être rendue supérieure à 1 dans toute la plage de fonctionnement.

Selon l'invention, le découplage présente un faible module d'élasticité parallèlement à l'axe 10, de manière à assurer un découplage des mouvements de compression, et de préférence un module d'élasticité élevé perpendiculairement à l'axe principal.

Ce découplage peut être obtenu soit par un moyen unique, soit par association de plusieurs moyens.

Tout d'abord, l'élément de liaison 60 peut être à lui seul capable de réaliser ce découplage en conférant au dispositif un degré de liberté élastique parallèlement à l'axe 10, au niveau de la liaison mécanique entre le pourtour du dispositif hydraulique d'amortissement (tirants 55 et écrous 56) et la collerette 6. C'est ce que permet, dans l'exemple représenté à la Fig. 1, la présence de la région annulaire centrale 63 en élastomère qui confère à l'élément de liaison 60 un degré de liberté élastique parallèlement à l'axe principal, alors que le module d'élasticité radiale reste élevé.

Si maintenant, l'élément de liaison 60, tel que représenté à la Fig. 2, est remplacé par une pièce métallique rigide, le découplage peut être assuré en n'assurant qu'un recouvrement partiel entre les lames des deux ensembles 40 et 50, soit comme représenté en assurant un recouvrement dans une zone 45 de largeur r₂ encadrée d'une zone de non-recouvrement 54 de largeur r₁ où seules les lames 40 sont présentes et d'une zone de non recouvrement 52 de largeur r₃ où seules les lames 50 sont présentes, soit en choisissant r₁ = 0 ou r₃ = 0.

On choisit les valeurs de r₁ et de r₃ en fonction de l'épaisseur et du nombre des lames de manière à assurer dans une direction parallèle à l'axe 10 une élasticité en flexion qui soit suffisante pour obtenir le découplage désiré des efforts de compression.

Dans le cas où le joint élastomère assure à lui seul la totalité du découplage, il y a intérêt à assurer aux lames 40 et 50 le plus grand recouvrement possible de manière à maximiser l'effet de l'amortissement.

Le dispositif selon l'invention permet d'assurer un bon découplage des excitations de compression, et donc notamment d'augmenter la durée de vie de l'amortisseur.

En particulier, le découplage s'effectuant de manière élastique, l'ensemble est toujours rappelé vers sa position de repos. En outre, le déplacement élastique induit par les excitations de compression n'influence pas l'amortissement. En effet, le découplage n'induit, dans la zone de recouvrement 45 qui est la zone active d'amortissement par cisaillement, que des forces parallèles à l'axe principal. En raison de la viscosité élevée de l'huile, la raideur de la partie active 45 du dispositif d'amortissement est très élevée et on peut considérer que dans la direction parallèle à l'axe principal, la zone de recouvrement 45 se comporte comme un bloc rigide. En effet, les excitations de compression, qui proviennent de l'élément menant 10, tendent à écraser le film d'huile présent entre les lames 40 soumises à l'excitation de compression et les lames 50 dans la zone de recouvrement 45. Dans la ou les zones de non-recouvrement, les excitations de compression tendent seulement à faire fléchir les lames sans compression du film d'huile, d'où un comportement de fléchissement élastique.

En outre, dans le dispositif selon l'invention, la dissipation thermique s'effectue essentiellement dans la chambre 3.

La Fig. 3 illustre en coupe partielle une variante de réalisation de l'invention. A titre illustratif, on y a représenté le cas où r₁ = 0 et r₃ = 0.

En outre, à l'élément de liaison 60 de la Fig. 2, a été substituée une rondelle métallique élastique 70 présentant un profil 71 s'amincissant vers la périphérie de l'amortisseur.

Comme dans le cas des Figs. 1 et 2, le dispositif amortisseur présente un axe de symétrie, qui est l'axe principal et un plan de symétrie qui est le plan médian P.

On remarquera également que dans les variantes préférentielles correspondant aux Figs. 1 à 6, les éléments assurant le découplage des excitations de compression sont disposés en dehors de la ligne de passage des efforts, qui est située sur l'axe principal de sorte que l'excitation compressive à découpler est transmise par le couvercle 20 et le fond 30. On notera que les forces correspondant aux excitations de compression sont importantes, leur valeur pouvant être de l'ordre de 1000 daN et plus, avec une amplitude pouvant être comprise entre 1 mm et 10 mm.

Dans le mode de réalisation représenté à la Fig. 4, le découplage est réalisé par un dispositif lamifié 80 maintenu entre les deux empilements de lames 58 et 59 par les tirants 55. Le dispositif 80 présente une alternance de lames métalliques cylindriques 81 et de régions cylindriques 82 en élastomère, dont l'axe est l'axe principal, de manière à obtenir un faible module élastique parallèlement à cet axe et un module élastique élevé (raideur élevée) perpendiculairement à celui-ci. Le dispositif lamifié 80 est encastré en 85 entre les pièces 6 et 7. La Fig. 6 représente un élément de liaison annulaire 90 susceptible d'être substitué à l'élément de liaison 60 de la Fig. 2. Il se présente sous la forme d'un disque métallique 90 présentant une ouverture centrale 92 et percé d'alvéoles 91 réparties sur son pourtour.

Un découplage peut également être obtenu à la liaison entre le cylindre 10 et les lames 40, en remplaçant les entretoises rigides 41 par des ressorts ou des empilements de rondelles Belleville. Dans cette configuration, le manchon 42 est susceptible de coulisser le long du cylindre, et il est rappelé élastiquement par les ressorts ou les empilements de rondelles.

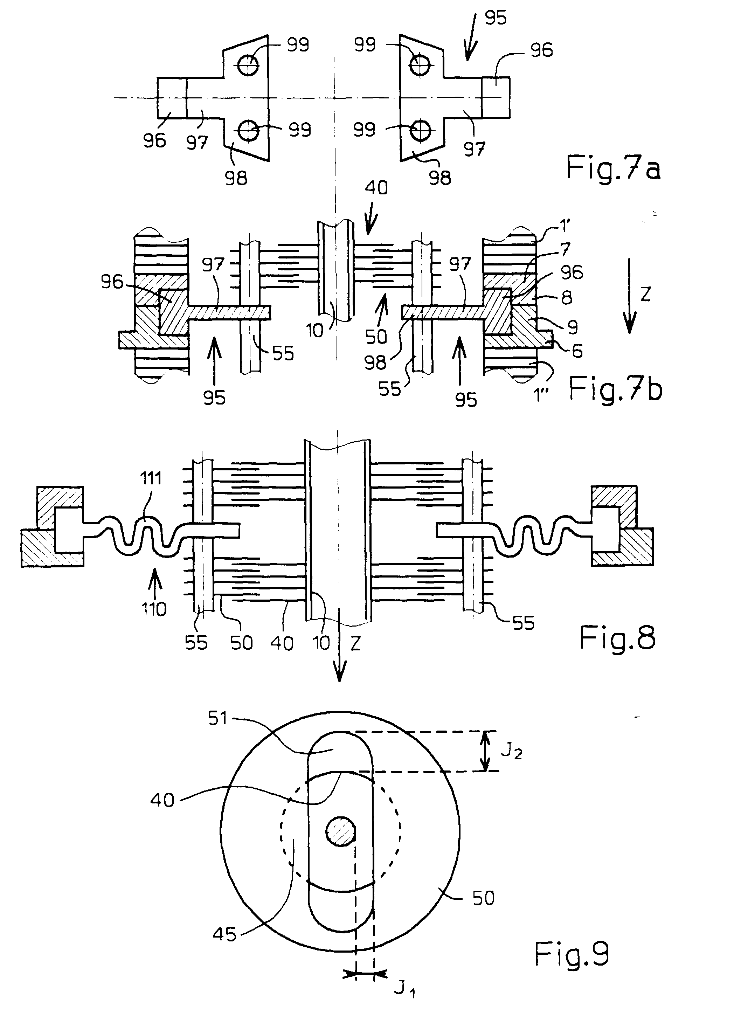

Le dispositif selon l'invention peut comporter une pluralité d'éléments élastiques entourant seulement une partie du pourtour de la liaison mécanique correspondante. Comme le montrent les Figs. 7a (vue de dessus) et 7b (coupe longitudinale), le découplage est réalisé par au moins deux pièces, par exemple métalliques, 95, dont chacune présente une région 96 permettant de la loger entre les pièces 6 et 7, une région centrale 97 formant une lame flexible, et une région 98, par exemple de forme trapézoïdale, présentant des ouvertures 99 permettant le passage des tirants 55 et la fixation interne de la pièce 95.

La variante de la Fig. 8 (coupe longitudinale) consiste en une membrane ondulée 110 pourvue d'ondulations 111 présentant une symétrie de révolution autour de l'axe principal Z.

Selon l'invention, les lames du premier et du deuxième ensemble peuvent être imbriquées de manière à conférer au dispositif d''amortissement des jeux (j₁, j₂) différents dans deux directions perpendiculaires entre elles et à l'axe principal, ces jeux étant fonction notamment des débattements extrêmes de l'amortisseur, et/ou des distances de recouvrement (r₂, r'₂) différents dans lesdites deux directions.

A la Fig. 5, par exemple on a r₂ ≠ r'₂. A la Fig. 9, les lames 40 et 50 sont en forme de disque, mais les lames 50 présentent une ouverture centrale 51 allongée dans une direction radiale, avec j₁ ≠ j₂.

## Revendications

1. Amortisseur de vibrations, notamment pour rotor d'hélicoptère, comprenant un élément menant (10) ayant un axe dit axe principal et destiné à être entraîné par un élément d'entraînement (100) ainsi qu'un élément rigide (6) destiné à être monté sur une structure, et comportant un ensemble d'amortissement reliant fonctionnellement l'élément menant (10) et l'élément rigide (6) pour amortir les vibrations dans au moins une direction perpendiculaire audit axe principal, l'ensemble d'amortissement comportant d'une part un dispositif d'hydraulique d'amortissement disposé dans une cavité (3) de fluide visqueux et d'autre part un dispositif flexible (1) présentant une raideur élevée dans une direction parallèle audit axe principal et une faible raideur dans ladite direction perpendiculaire à l'axe principal, caractérisé en ce que le dispositif hydraulique d'amortissement (40,50) présente un premier (40) et un deuxième (50) ensembles de lames planes dont chacune a son plan perpendiculaire à l'axe principal, le premier ensemble (40) étant monté sur l'élément menant (10) par l'intermédiaire d'une première liaison mécanique (42) et le deuxième ensemble (50) étant monté sur l'élément rigide (6) par l'intermédiaire d'une deuxième liaison mécanique (60) , les lames (40,50) du premier (40) et du deuxième (50) ensembles étant disposées de manière imbriquée et étant étroitement espacées de manière à présenter des zones d'amortissement visqueux (45) situées chacune entre une lame (40) du premier ensemble et une lame (50) du deuxième ensemble et en ce qu'au moins une des première (41) et deuxième (60) liaisons mécaniques comporte au moins un élément élastique (60,70, 80, 90, 95) qui présente une faible raideur parallèlement à l'axe principal de manière à assurer un découplage des excitations de compression entre l'élément menant (10) et l'élément rigide (6).

2. Amortisseur de vibrations, notamment pour rotor d'hélicoptère, comprenant un élément menant (10) ayant un axe dit axe principal et destiné à être entraîné par un élément d'entraînement (100) ainsi qu'un élément rigide (6) destiné à être monté sur une structure, et comportant un ensemble d'amortissement reliant fonctionnellement l'élément menant (10) et l'élément rigide (6) pour amortir les vibrations dans au moins une direction perpendiculaire audit axe principal, l'ensemble d'amortissement comportant d'une part un dispositif hydraulique d'amortissement disposé dans une cavité de fluide (3) et d'autre part un dispositif flexible (1) présentant une raideur élevée dans une direction parallèle audit axe principal et une faible raideur dans ladite direction perpendiculaire à l'axe principal, caractérisé en ce que le dispositif hydraulique d'amortissement (40,50) présente un premier (40) et un deuxième (50) ensembles de lames planes dont chacune a son plan perpendiculaire à l'axe principal, le premier ensemble (40) étant monté sur l'élément menant (10) par l'intermédiaire d'une première liaison mécanique (42) et le deuxième ensemble (50) étant monté sur l'élément rigide (6) par l'intermédiaire d'une deuxième liaison mécanique (60), les lames du premier (40) et du deuxième (50) ensembles étant disposées de manière imbriquée et étant étroitement espacées de manière à présenter des zones d'amortissement visqueux situées chacune entre une lame du premier ensemble (40) et une lame du deuxième ensemble (50) et en ce que chaque lame d'au moins un des premier (40) et deuxième (50) ensembles présente au moins une région (52,54) dans laquelle elles ne sont pas imbriquées avec les lames de l'autre ensemble, lesdites régions (52,54) desdites lames étant dimensionnées de manière à conférer au dispositif hydraulique d'amortissement une faible raideur dans une direction parallèle audit axe principal de manière à assurer un découplage des excitations de compression entre l'élément menant et l'élément rigide (6).

3. Amortisseur de vibrations selon la revendication 2, caractérisé en ce qu'au moins une des première et deuxième liaisons mécaniques comporte au moins un élément élastique (60, 70, 80, 90, 95) qui présente une faible raideur parallèlement à l'axe principal de manière à assurer un découplage des excitations de compression.

4. Dispositif selon une des revendications 1 ou 3, caractérisé en ce qu'un dit élément élastique (60, 70, 80, 90, 95) présente une élasticité élevée perpendiculairement à l'axe principal.

5. Dispositif selon une des revendications 1 ou 4, caractérisé en ce qu'au moins un élément élastique comporte au moins une rondelle métallique (70) ou bien un dispositif lamifié (80) ou bien un ressort ou bien une membrane.

6. Dispositif selon une des revendications 1 à 4, caractérisé en ce qu'il comporte une pluralité d'éléments élastiques (95), chaque élément élastique (95) entourant seulement une partie du pourtour de la liaison mécanique correspondante.

7. Dispositif selon une des revendications précédentes, caractérisé en ce que les lames (40) du premier ensemble ont une forme de disque et en ce que les lames (50) du deuxième ensemble ont une forme de demi-lune.

8. Dispositif selon une des revendications précédentes, caractérisé en ce que les lames du premier et du deuxième ensemble sont imbriquées de manière à conférer au dispositif d'amortissement des jeux (j₁, j₂) et/ou des distances de recouvrement (r₁, r₂) différentes dans deux directions perpendiculaires entre elles et à l'axe principal.

9. Dispositif selon une des revendications précitées, caractérisé en ce que le dispositif flexible est une structure lamifiée (1) présentant un empilement de lames planes (5) et de plaques élastomères (2).

10. Dispositif selon une des revendications précédentes caractérisé en ce que l'élément menant est un cylindre (10) aux extrémités duquel sont montés respectivement un fond (30) et un couvercle (20), en ce que le dispositif flexible (1) est cylindrique et présente un axe qui est ledit axe principal et est monté entre deux faces internes respectivement du couvercle (20) et du fond (30) de manière à entourer ledit dispositif hydraulique d'amortissement (40, 45), la cavité de fluide (3) étant délimitée par l'élément menant (10), le fond (30), le couvercle (20) et le dispositif flexible (1), et en ce que ledit élément rigide (6) est disposé dans une région médiane du dispositif flexible (1).

11. Dispositif selon une des revendications précédentes, caractérisé en ce que le fluide visqueux présente à température ambiante une viscosité supérieure à 100 000 centistokes et de préférence comprise entre 300 000 et 5 millions de centistokes.

## Patentansprüche

1. Schwingungsdämpfer insbesondere für einen Helikopterrotor mit einem Führungselement (10), das eine als Hauptachse bezeichnete Achse aufweist und zum Antrieb durch ein Antriebselement (100) eingerichtet ist, sowie einem starren Element (6), das zur Befestigung an einer Struktur eingerichtet ist, der eine das Führungselement (10) und das starre Element (6) funktionell verbindende Dämpfungseinrichtung zur Dämpfung der Schwingungen in zumindest einer zur Hauptachse rechtwinkligen Richtung umfaßt, wobei die Dämpfungseinrichtung zum einen eine in einem Flüssikeitsbehälter (3) angeordnete hydraulische Dämpfungsvorrichtung und zum anderen eine flexible Vorrichtung (1) umfaßt, die eine erhöhte Starrheit in einer zur Hauptachse parallelen Richtung und eine geringe Starrheit in einer Richtung rechtwinklig zur Hauptachse aufweist, dadurch gekennzeichnet, daß die hydraulische Dämpfungsvorrichtung (40, 50) einen ersten (40) und einen zweiten (50) Satz planer Lamellen aufweist, von denen jede eine rechtwinklig zur Hauptachse ausgerichtete Ebene aufweist, wobei der erste Satz (40) auf dem Führungselement (10) mittels einer ersten mechanischen Bindung (42) und der zweite Satz (50) auf dem starren Element (6) mittels einer zweiten mechanischen Bindung (60) befestigt ist und die Lamellen (40, 50) des ersten (40) und des zweiten (50) Satzes auf ineinandergreifende Art und Weise angeordnet und eng voneinander beabstandet sind, so daß viskose Dämpfungsbereiche (45) bereitgestellt sind, die jeweils zwischen einer Lamelle (40) des ersten Satzes und einer Lamelle (50) des zweiten Satzes angeordnet sind, und daß wenigstens eine der ersten (41) und zweiten (60) mechanischen Bindungen wenigstens ein elastisches Element (60, 70, 80, 90, 95) aufweist, das eine derartig geringe Starrheit parallel zur Hauptachse aufweist, daß eine Entkopplung der Druckerregung zwischen dem Führungselement (10) und dem starren Element (6) sichergestellt ist.

2. Schwingungsdämpfer insbesondere für einen Helikopterrotor mit einem Führungselement (10), das eine als Hauptachse bezeichnete Achse aufweist und zum Antrieb durch ein Antriebselement (100) eingerichtet ist, sowie einem starren Element (6), das zur Befestigung an einer Struktur eingerichtet ist, der eine das Führungselement (10) und das starre Element (6) funktionell verbindende Dämpfungseinrichtung zur Dämpfung der Schwingungen in zumindest einer zur Hauptachse rechtwinkligen Richtung umfaßt, wobei die Dämpfungseinrichtung zum einen eine in einem Flüssikeitsbehälter (3) angeordnete hydraulische Dämpfungsvorrichtung und zum anderen eine flexible Vorrichtung (1) umfaßt, die eine erhöhte Starrheit in einer zur Hauptachse parallelen Richtung und eine geringe Starrheit in einer Richtung rechtwinklig zur Hauptachse aufweist, dadurch gekennzeichnet, daß die hydraulische Dämpfungsvorrichtung (40, 50) einen ersten (40) und einen zweiten (50) Satz planer Lamellen aufweist, von denen jede eine rechtwinklig zur Hauptachse ausgerichtete Ebene aufweist, wobei der erste Satz (40) auf dem Führungselement (10) mittels einer ersten mechanischen Bindung (42) und der zweite Satz (50) auf dem starren Element (6) mittels einer zweiten mechanischen Bindung (60) befestigt ist und die Lamellen (40, 50) des ersten (40) und des zweiten (50) Satzes auf ineinandergreifende Art und Weise angeordnet und eng voneinander beabstandet sind, so daß viskose Dämpfungsbereiche bereitgestellt sind, die jeweils zwischen einer Lamelle (40) des ersten Satzes und einer Lamelle (50) des zweiten Satzes angeordnet sind, und daß jede Lamelle zumindest eines der ersten (40) und zweiten (50) Sätze zumindest einen Bereich (52, 54) aufweist, mit dem sie nicht in die Lamellen des anderen Satzes eingreifen, wobei die Bereiche (52, 54) der Lamellen derartig dimensioniert sind, daß sie der hydraulischen Dämpfungsvorrichtung parallel zur Hauptachse eine derartig geringe Starrheit verleihen, daß eine Entkopplung der Druckerregungen zwischen dem Führungselement und dem starren Element (6) sichergestellt ist.

3. Schwingungsdämpfer nach Anspruch 2, dadurch gekennzeichnet, daß zumindest einer der ersten und zweiten mechanischen Bindungen zumindest ein elastisches Element (60, 70, 80, 90, 95) aufweist, das parallel zur Hauptachse eine derartig geringe Starrheit aufweist, daß es eine Entkopplung der Druckerregungen sichergestellt ist.

4. Vorrichtung nach einem der Ansprüche 1 oder 3, dadurch gekennzeichnet, daß das elastische Element (60, 70, 80, 90, 95) eine erhöhte Elastizität rechtwinklig zur Hauptachse aufweist.

5. Vorrichtung nach Anspruch 1 oder 4, dadurch gekennzeichnet, daß mindestens ein elastisches Element zumindest einen Metallring (70) oder eine schichtweise aufgebaute Einheit (80) oder eine Feder oder eine Membran umfaßt.

6. Vorrichtung nach einem der Ansprüche 1 bis 4, dadurch gekennzeichnet, daß eine Vielzahl von elastischen Elementen (95) vorgesehen sind, wobei jedes elastische Element (95) lediglich einen Teil des Umfangs der zugeordneten mechanischen Bindung umschließt.

7. Vorrichtung nach einem der vorhergehenden Ansprüche, dadurch gekennzeichnet, daß die Lamellen (40) des ersten Satzes scheibenförmig ausgestaltet sind und daß die Lamellen (50) des zweiten Satzes halbmondförmig ausgestaltet sind.

8. Vorrichtung nach einem der vorhergehenden Ansprüche, dadurch gekennzeichnet, daß die Lamellen des ersten und des zweiten Satzes derart ineinander eingreifen, daß sie der Dämpfungsvorrichtung unterschiedliche Spiele (j₁, j₂) und/oder Überlappungsabstände (r₁, r₂) in zwei zueinander und zur Hauptachse rechtwinkligen Richtungen verleihen.

9. Vorrichtung nach einem der vorhergehenden Ansprüche, dadurch gekennzeichnet, daß die flexible Vorrichtung eine geschichtete Struktur aufweist, die einem Stapel aus planen Lamellen (5) und elastomeren Scheiben (2) entspricht.

10. Vorrichtung nach einem der vorhergehenden Ansprüche, dadurch gekennzeichnet, daß das Führungselement ein Zylinder (10) ist, an dessen Endungen ein Bodenteil (30) beziehungsweise eine Abdeckung (20) befestigt sind, und daß die flexible Vorrichtung (1) zylinderförmig ausgestaltet ist, eine Achse als besagte Hauptachse aufweist sowie zwischen zwei Innenflächen der Abdeckung (20) und des Bodenteils (30) derart befestigt ist, daß sie die hydraulische Dämpfungsvorrichtung (40, 45) umschließt, wobei der Flüssigkeitsbehälter (3) durch das Führungsteil (10), das Bodenteil (30), die Abdeckung (20) und die flexible Vorrichtung (1) begrenzt ist, und daß das starre Element (6) in einem Mittelbereich der flexiblen Vorrichtung (1) angeordnet ist.

11. Vorrichtung nach einem der vorhergehenden Ansprüche, dadurch gekennzeichnet, daß die viskose Flüssigkeit bei Raumtemperatur eine Viskosität über 100 000 Zentistokes und vorzugsweise zwischen 300 000 und 5 Millionen Zentistokes aufweist.

## Claims

1. A vibration damper, particularly for a helicopter rotor, comprising a driving element (10) having an axis termed main axis, and intended to be driven by a driving element (100) as well as a rigid element (6) intended to be mounted on a structure, and including a damping unit functionally connecting the driving element (10) and the rigid element (6) to damp the vibrations in at least one direction perpendicular to the said main axis, the damping unit comprising, on the one hand, a hydraulic damping device arranged in a cavity (3) of viscous fluid, and, on the other hand, a flexible device (1) of high stiffness in a direction parallel to the said main axis, and low stiffness in the said direction perpendicular to the main axis, characterized in that the hydraulic damping device (40, 50) has a first (40) and a second (50) units of flat blades, each of which has its plane perpendicular to the main axis, the first assembly (40) being mounted on the driving element (40) by means of a first mechanical connection (42) and the second assembly (50) being mounted on the rigid element (6) by means of a second mechanical connection (60), the blades (40, 50) of the first (40) and the second (50) assemblies being imbricated, and being closely spaced so as to present viscous damping areas (45), each situated between a blade (40) of the first assembly and a blade (50) of the second assembly, and in that at least one of the first (41) and second (60) mechanical connections comprises at least one resilient element (60, 70, 80, 90, 95) which possesses low stiffness parallel to the main axis, so as to provide a decoupling of compression excitations between the driving element (10) and the rigid element (6).

2. A vibration damper, particularly for a helicopter rotor, comprising a driving element (10) having an. axis termed main axis, and intended to be driven by a driving element (100) as well as a rigid element (6) intended to be mounted on a structure, and including a damping unit functionally connecting the driving element (10) and the rigid element (6) to damp the vibrations in at least one direction perpendicular to the said main axis, the damping unit comprising, on the one hand, a hydraulic damping device arranged in a cavity (3) of fluid, and, on the other hand, a flexible device (1) of high stiffness in a direction parallel to the said main axis,, and low stiffness in the said direction perpendicular to the main axis, characterized in that the hydraulic damping device (40, 50) has a first (40) and a second (50) assemblies of flat blades, each of which has its plane perpendicular to the main axis, the first assembly (40) being mounted on the driving element (40) by means of a first mechanical connection (40) and the second assembly (50) being mounted on the rigid element (6) by means of a second mechanical connection (60), the blades of the first (40) and the second (50) assemblies being imbricated, and being closely spaced so as to present viscous damping areas (45), each situated between a blade (40) of the first assembly and a blade (50) of the second assembly, and in that each blade of at least one of the first (40) and second (50) assemblies has at least one area (52, 54) in which they are not imbricated with the blades of the other assembly, the said areas (52, 54) of the said blades being dimensioned so as to impart to the hydraulic damping device a low stiffness in a direction parallel to the said main axis, so as to provide a decoupling of the compression excitations between the driving element and the rigid element (6).

3. A vibration damper according to claim 2, characterized in that at least one of the first and second mechanical connections comprises at least one resilient element (60, 70, 80, 90, 95) which has a low stiffness parallel to the main axis so as to ensure a decoupling of the compression excitations.

4. A device according to either claim 1 or claim 3, characterized in that one said resilient element (60, 70, 80, 90, 95) has high resiliency perpendicularly to the main axis,

5. A device according to either claim 1 or claim 4, characterized in that at least one resilient element has at least one metal washer (70) or a bladed device (80) or a spring or a membrane.

6. A device according to one of claims 1 to 4, characterized in that it comprises a plurality of resilient elements (95), each resilient element (95) surrounding only part of the outline of the corresponding mechanical connection.

7. A device according to one of the foregoing claims, characterized in that the blades (40) of the first assembly are disc-shaped, and in that the blades (50) of the second assembly are half-moon shaped.

8. A device according to one of the foregoing claims, characterized in that the blades of the first and the second assemblies are imbricated so as to impart to the damping device plays (j₁, j₂) and/or overlapping distances (r₁, r₂) different in two directions, mutually perpendicular, and perpendicular to the main axis.

9. A device according to one of the above-mentioned claims, characterized in that the flexible device is a bladed structure (1) having a stack of flat blades (5) and of elastomer plates (2).

10. A device according to one of the foregoing claims, characterized in that the driving element is a cylinder (10) at the ends of which there are respectively mounted a bottom (30) and a cover (20), and in that the flexible device (1) is cylindrical and has an axis which is the said main axis, and is mounted between two inner faces respectively of the cover (20) and of the bottom (30) so as to surround the said hydraulic damping device (40, 45), the fluid cavity (3) being defined by the driving element (10), the bottom (30), the cover (20) and the flexible device (1), and in that the said rigid element (6) is arranged in a central region of the flexible device (1).

11. A device according to one of the foregoing claims, characterized in that the viscous fluid has at ambient temperature a viscosity greater than 100,000 centistolces, and preferably comprised between 300,000 and 5 million centistokes.
